# FASCICULE DE BREVET EUROPEEN

(11) **EP 0 487 374 B1**
(45) Date de publication et mention de la délivrance du brevet: **26.04.1995**
(21) Numéro de dépôt: 91402977.2
(22) Date de dépôt: 06.11.1991
(51) Int. Cl.: F17C 1/16, F17C 1/06, B29C 53/60, B29C 63/24, B29D 22/00

(54) **Réservoir de poids unitaire faible utilisable notamment pour le stockage de fluides sous pression et son procédé de fabrication**
Behälter mit geringem Einheitsgewicht, insbesondere geeignet zur Lagerung von unter Druck stehenden Flüssigkeiten und Verfahren zu seiner Herstellung
Reservoir of feeble unitary weight particularly useful in the storage of fluids under pressure and method for its manufacture

(30) Priorité: 19.11.1990 FR 9014490
(43) Date de publication de la demande: 27.05.1992
(73) Titulaire: INSTITUT FRANCAIS DU PETROLE, 92502 Rueil-Malmaison (FR)
(72) Inventeur: Huvey, Michel, F-78380 Bougival (FR); Cheron, Jacques, F-78600 Maisons Lafitte (FR)

(56) Documents cités:
- EP-A- 0 333 013
- FR-A- 858 986
- FR-A- 2 340 814
- GB-A- 1 161 846
- US-A- 2 988 240
- US-A- 3 207 352
- US-A- 3 508 677

## Description

La présente invention concerne un réservoir de poids unitaire faible capable de supporter des pressions élevées pour fluides sous pression et son procédé de fabrication.

Les caractéristiques principales que doivent présenter de tels réservoirs sont connues à savoir la légéreté, et une résistance suffisante pour résister aux pressions exercées par les fluides contenus.

Il est connu de transporter des gaz comprimés ou des liquides sous pression, tels le gaz butane ou propane liquéfié, dans des bouteilles étanches résistant à la pression. Ces bouteilles sont le plus souvent en acier, et le poids des récipients représente au minimum l'équivalent du poids du fluide transporté. Il en résulte que la manutention des bouteilles vides est presque aussi difficile que celle des bouteilles pleines, et que les frais de transport des récipients vides après usage sont du même ordre de grandeur que ceux occasionnés lors du transport des récipients pleins.

Le problème technique posé ici n'est pas évident car les caractéristiques de légéreté et de résistance sont souvent incompatibles.

L'art antérieur décrit des réservoirs légers mais incapables de résister à des pressions relativement élevées ou des dispositifs nécessitant l'utilisation de matériaux très onéreux.

Lorsque des matières à des coûts raisonnables sont utilisées, pour le développement de tels dispositifs dans le domaine grand public, par exemple l'utilisation des composites unidirectionnels à matrice thermoplastique pour la fabrication de bouteilles, la structure de la bouteille fait toujours intervenir une gaine interne constituée d'un matériau métallique. Cette gaine a pour rôle principal de reprendre l'effet de fonds, et accessoirement d'être étanche. Il en résulte une épaisseur qui contribue fortement au poids de l'ensemble.

L'invention décrite dans le brevet US-4,589,562 décrit une structure de réservoir conçue pour résister à des pressions élevées, ceci grâce à l'enroulement de composite autour de son corps cylindrique et d'une partie des fonds. Cependant, l'enroulement ne couvre pas la totalité des fonds et de fait ne soutient pas les fonds, ce qui ne permet pas de diminuer leur épaisseur et ainsi d'alléger le réservoir.

Le brevet GB-1.161.846 décrit un réservoir comprenant une gaine ondulée dont les creux sont remplis d'une composition résiliante et déformable ayant pour but de transmettre les efforts.

La présente invention décrit des réservoirs agencés de manière à concilier une relative légéreté tout en conservant une résistance à la pression identique ou supérieure à la résistance des réservoirs conventionnels. La solution apportée est la suivante :la structure est constituée de deux fonds hémisphériques ou ellipsoïdaux séparés par une zone cylindrique circulaire ondulée armée circonférenciellement et longitudinalement, ces fonds étant soutenus par des renforts longitudinaux reprenant l'effet de fonds de la partie tubulaire. La présence de ces renforts permet de diminuer l'épaisseur des fonds du réservoir, tout en conservant à l'ensemble une résistance suffisante à la pression.

La fabrication de tubes ondulés armés circonférenciellement est connue et décrite dans le brevet français FR-2.553.860 (US-4.811.761) du demandeur.

La structure ainsi constituée présente l'avantage d'offrir un poids unitaire compris entre la moitié et le sixième de celui des récipients conventionnels en acier tout en préservant une résistance à la pression identique à celle des bouteilles de technologie classique.

La présente invention décrit aussi la façon de fabriquer le réservoir, utilisable notamment pour le stockage de fluides sous pression.

Le réservoir résulte d'une combinaison des formes, épaisseurs et dimensions, ainsi que de la mise en oeuvre de technologies convenables pour fabriquer ce réservoir ou cette bouteille.

Le réservoir utilisable pour stocker les fluides sous pression est composé d'une gaine interne constituée de deux fonds séparés par un corps ou zone cylindrique ondulée et assemblés audit corps cylindrique, lesdits fonds étant munis d'au moins une ouverture et de moyens de fermeture ou de communication avec l'extérieur (lesdits moyens pouvant être des vannes ou un bouchon et une vanne), et de moyens de résistance à la traction longitudinale caractérisé en ce que la gaine interne de la zone cylindrique comporte des ondulations, les ondes de ladite zone cylindrique ayant une forme circonférencielle ou hélicoïdale à faible pas, les creux extérieurs des ondulations de ladite gaine interne étant garnis d'une composition comprenant des fibres de renforcement et en ce que les moyens de résistance à la traction longitudinale ou renfort longitudinal sont placés sur l'ensemble de la structure externe du réservoir à l'exception des ouvertures.

La composition comprend, par exemple, une résine époxy ou une résine thermodurcissable ou encore une résine thermoréticulable armée de fibres de renforcement.

Le renfort longitudinal peut être constitué de fibres mises en place de façon à ce que les fibres passent autour des pôles de la bouteille, ou bobinage polaire, ou d'une tresse mise en place sur la structure externe du réservoir.

Le procédé de fabrication du réservoir comprend les étapes suivantes :
(a) on réalise une gaine interne d'un réservoir constituée par deux fonds hémisphériques ou ellipsoïdaux et par une zone cylindrique comportant des ondulations circonférentielles,
(b) on garnit sur au moins une partie de leur hauteur H, les portions externes creuses de la partie de la gaine interne ondulée sensiblement cylindrique du réservoir, d'une composition comportant une résine stabilisable renforcée de fibres,
(c) on soumet le récipient ainsi armé sur au moins une partie de sa longueur à un traitement qui permet la stabilisation de la composition stabilisable,
(d) on dépose sur l'ensemble de la structure externe du réservoir ainsi armé circonférenciellement, à l'exception des ouvertures, un renfort longitudinal.

L'étape (a) peut être réalisée de deux façons. Une gaine interne d'un réservoir est obtenue soit par une étape de fabrication où l'on moule par extrusion soufflage un matériau extrudable dans un moule dont la paroi est constituée d'une zone cylindrique comportant des ondulations circonférencielles et des fonds hémisphériques ou ellipsoïdaux, soit par une étape de fabrication au cours de laquelle on fixe des fonds hémisphériques ou ellipsoïdaux par des moyens de fixation aux deux extrémités d'une zone cylindrique ondulée, les fonds présentant des ouvertures.

Selon des modalités préférées de réalisation, dont certaines peuvent être réalisées simultanément :

Le matériau extrudable peut être soit un métal soit une résine thermoplastique.

La résine est par exemple une résine photoréticulable et l'étape (c) est réalisée en exposant ledit ensemble à l'action d'une lampe génératrice de rayonnement ultra-violet.

La résine est, par exemple, une résine thermoréticulable et l'ensemble est maintenu à l'étape de stabilisation dans des conditions permettant à la réticulation de se produire.

La résine est, par exemple, une résine thermodurcissable et la stabilisation est réalisée par chauffage dudit ensemble jusqu'à une température permettant le durcissement de la résine.

Le renfort longitudinal de la zone cylindrique, qui assure également le soutien des fonds, est constitué de fibres déposées sur la structure externe du réservoir par bobinage hélicoïdal ou polaire, et/ou d'une tresse mise en place sur la structure externe du réservoir.

Le renfort longitudinal est par exemple constitué d'une mèche d'aramide imprégnée d'élastomère thermoplastique, les extrémités de la mèche étant fixées par collage aux extrémités du réservoir.

Après l'étape (b), on peut déposer, par exemple, une gaine de matériau substantiellement non perméable à ladite résine, de manière à maintenir celle-ci sensiblement en place dans lesdites portions externes creuses du tube ondulé, avant de procéder à l'étape (d). De cette façon, le traitement de stabilisation est effectué en même temps que le bobinage. La gaine déposée éventuellement peut être un simple enroulement hélicoïdal d'une bande de matériau plastique ou élastomérique dont l'épaisseur peut être faible, puisque cette bande, après durcissement de la résine n'a normalement plus de rôle à jouer.

Dans toutes les variantes de fabrication décrites précédemment, au moins une extrémité du réservoir est pourvue d'un système permettant la communication avec l'extérieur ou la fermeture étanche.

Le réservoir de fluides sous pression ainsi obtenu peut éventuellement être garni extérieurement d'une couche protectrice, par exemple en projetant une solution d'un élastomère thermoplastique après l'étape (d).

Afin de renforcer la protection du réservoir, ce dernier peut être placé dans une enveloppe protectrice constituée, par exemple, par un conteneur en carton ondulé, l'espace entre la boîte et le réservoir étant rempli d'une composition expansible à base de résine phénolique.

L'invention sera mieux comprise et d'autres buts, caractéristiques, détails et avantages de celle-ci apparaîtront plus clairement au cours de la description explicative qui va suivre, faite en référence aux dessins schématiques annexés donnés uniquement à titre d'exemple, illustrant différents modes de réalisation de l'invention et dans lequel :
- La figure 1 décrit une structure légère ou réservoir de stockage de fluides telle qu'obtenue par le procédé de l'invention.
- La figure 2 montre une portion de la zone cylindrique ondulée en coupe du réservoir, selon l'axe longitudinal du réservoir,
- La figure 3 montre une structure légère ou réservoir de stockage de fluides tel qu'obtenu par le procédé de l'invention et dans son utilisation finale.

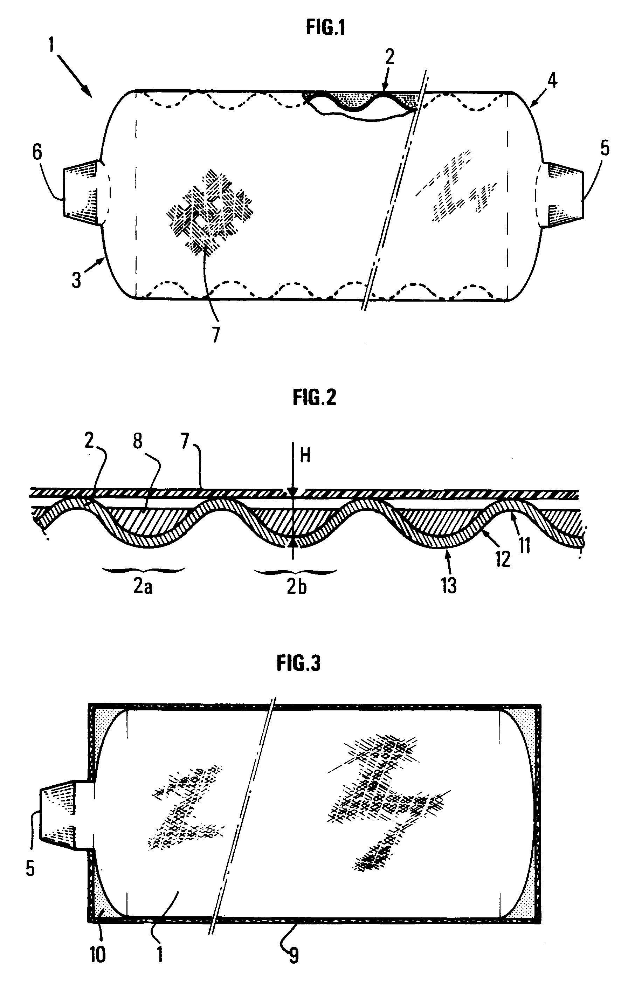

La figure 1 montre un réservoir 1 dont la gaine interne comprend une zone cylindrique ondulée 2, deux fonds 3, 4 situés aux extrémités de la zone cylindrique, lesdits fonds étant équipés de deux vannes 5, 6 situées aux extrémités du réservoir et des moyens de résistance à la traction longitudinale ou renfort longitudinal 7.

Les fonds 3, 4 ont une forme ellipsoïdale ou hémisphérique.

La gaine étanche des fonds 3, 4 pourra être avantageusement de la même nature que celle de la gaine ondulée constituant la zone cylindrique 2 du réservoir, bien qu'elle puisse être d'une nature différente. L'utilisation de produits de même nature pour la gaine des fonds et celle de la zone cylindrique ondulée permet une soudure étanche qui présente des qualités mécaniques équivalentes à celles de la longueur courante.

La liaison entre les fonds 3, 4 et le corps du réservoir 2 se fera par collage ou brasure dans le cas où les produits sont de nature différentes, sauf bien sur dans le cas où les fonds et la partie cylindrique ondulée ont été moulés en une seule opération.

Les fonds 3, 4 peuvent être réalisés par estampage, thermoformage, injection, ou tout autre procédé habituel.

Les zones extrêmes de la bouteille seront équipées de vannes ou de bouchons 5, 6 tels que ceux normalisés pour le stockage des gaz liquéfiés ou des gaz comprimés.

Le renfort longitudinal 7 est déposé sur l'ensemble de la structure externe du réservoir 1 à l'exception des ouvertures.

Le renfort longitudinal 7 peut être constitué de fibres déposées sur la structure par bobinage polaire ou par une tresse mise en place sur l'ensemble de la structure.

Le renfort longitudinal 7 a pour but de reprendre l'effet de fonds de la partie cylindrique ou tubulaire du réservoir. La présence dudit renfort sur les fonds 3, 4 permet de diminuer l'épaisseur des fonds 3, 4.

Plus précisement la figure 2 montre la structure de la portion de la gaine interne ondulée armée formant la zone cylindrique du réservoir, telle celle décrite dans la demande de brevet français EN 90/05.507 du demandeur.

Les portions creuses 2a, 2b de la gaine interne ondulée sont remplies de résine armée de fibres 8 sur la presque totalité de leur hauteur H. Il est indispensable de remplir les portions creuses, à partir du fond (qui correspond à la face externe de ladite gaine), jusqu'à la zone où le rayon de courbure de la zone externe de l'ondulation de la gaine devient sensiblement constant (varie de moins de 10%).

La gaine ondulée est constituée de portions de cercle successives 11, 13, ces portions de cercle peuvent être séparées ou non par des portions 12 sensiblement rectilignes vues en coupe, et correspondant à des zones sensiblement coniques, en représentation spatiale.

Les formes constituées par les portions creuses et en relief successives peuvent constituer des anneaux successifs ou adopter une forme hélicoïdale.

On ne sortira pas de la présente invention si l'on utilise une structure de type "accordéon". Dans ce cas la portion creuse pourra être garnie sur sensiblement toute sa hauteur. De la même façon l'ondulation pourra être sinusoidale ou approchante.

Les moyens de résistance à la traction longitudinale, tels, par exemple des fibres ou une tresse sont représentés schématiquement sur la Fig.2 et désignés par la référence 7.

La figure 3 montre un réservoir de stockage dans son utilisation finale.

Le réservoir 1 est placé à l'intérieur d'un conteneur 9 en carton ondulé. Seuls les moyens de fermeture ou de communication avec l'extérieur, par exemple sur la figure une vanne 5 sont à l'extérieur du conteneur 9. L'espace vide situé entre les parois du conteneur et le réservoir est rempli d'un matériau 10 présentant un bon comportement en cas d'incendie, tel une composition expansible à base de résine phénolique. L'ensemble conteneur 9 et matériau 10 constitue une enveloppe protectrice aux chocs et à l'échauffement de l'ensemble.

De plus cet agencement facilite le transport et le stockage du réservoir.

Dans la suite de la description on appelle armage circonférentiel l'opération qui permet de déposer la composition comprenant des fibres de renforcement dans le creux externe des ondulations du réservoir et armage longitudinal l'opération par laquelle on dépose les moyens de résistance à la traction longitudinale.

Suivant un premier mode de fabrication, on utilise un moule dont la zone cylindrique comporte des ondulations circonférencielles, et qui présente des fonds hémisphériques ou ellipsoïdaux. Par un procédé d'extrusion soufflage, on réalise des bouteilles en matériau thermoplastique peu perméable, tel que le polytéréphtalate d'éthylène glycol. On obtient ainsi la gaine interne d'un réservoir.

On équipe ensuite les extrémités du réservoir avec une vanne et un bouchon ou avec deux vannes.

L'opération d'armage circonférentiel comprend une étape de garnissage des creux des ondes suivie d'une étape de traitement de stabilisation de la composition comprenant des fibres de renforcement.

Lors de l'étape de garnissage, le réservoir ainsi constitué est placé sur une machine d'enroulement filamentaire au moyen de laquelle on garnit les portions externes creuses de la partie de la gaine interne cylindrique de mèches de filaments de verre préimprégnés d'une composition photoréticulable. La proportion en volume des fibres est environ de 50%.

Le réservoir ainsi obtenu est alors soumis au traitement de stabilisation de la composition photoréticulable comprenant des fibres de renforcement.

Dans le cas spécifique de cette fabrication, le traitement résulte de l'action d'une lampe génératrice de rayonnement ultra-violet, pendant une durée d'environ 5 minutes, jusqu'à obtention de la réticulation de ladite composition photoréticulable.

Ce traitement peut être effectué lorsque la bouteille est sur la machine de bobinage.

L'opération d'armage longitudinal s'effectue de la façon suivante.

Le réservoir est remis sur la même machine d'enroulement, au moyen de laquelle on dépose une couche de polyaramide (Kevlar ou Twaron) préimprégné d'un élastomère thermoplastique du type Styrène-Isopropène-Styrène partiellement hydrogéné de 0.2 mm d'épaisseur. Les mèches ainsi déposées sont collées aux extrémités du réservoir par ajout de quelques gouttes d'un solvant de l'élastomère. Ce solvant peut être du trichloéthylène.

Tout autre moyen assurant un arrêt fiable des mèches peut être utilisé.

On peut éventuellement ajouter une protection supplémentaire en plaçant le réservoir ainsi constitué dans un conteneur, par exemple de carton ondulé, et garnir l'espace entre le conteneur et le réservoir d'une mousse qui présente un bon comportement en cas d'incendie, par exemple, une composition expansible à base de résine phénolique ou tout autre matériau remplissant la même fonction.

A titre d'élément de comparaison avec l'art antérieur, le réservoir ainsi constitué a une masse de 0,7 Kg, ce qui correspond environ au huitième de la masse d'un réservoir conventionnel (6 Kg) pour une même capacité et ceci tout en conservant la même tenue à la pression d'éclatement.

Dans un autre mode de réalisation de fabrication, on utilise un tube en acier inoxydable ondulé préalablement selon la technique décrite dans la demande de brevet français précitée EN 90/05.507 sur lequel on soude des fonds hémisphériques ou ellipsoïdaux de la même matière, les fonds étant situés aux extrémités de la virole constituée par la partie cylindrique ondulée de la gaine interne. Les moyens de soudure utilisés dans ce procédé sont connus et ne seront donc pas décrits. L'épaisseur des fonds est d'environ 1mm.

De façon identique à la description ci-dessus l'opération d'armage circonférentiel comprend une étape de garnissage des creux des ondulations suivie d'une étape de traitement de stabilisation de la composition comprenant des fibres de renforcement.

Pour garnir le creux des ondulations, le réservoir ainsi constitué est placé sur une machine d'enroulement ce qui permet de garnir les cannelures ou ondulations externes de la gaine interne ondulée d'un préimprégné thermodurcissable fibres de verre-résine époxy dans la proportion volumique 50% / 50%.

Le réservoir ainsi obtenu est soumis au traitement de durcissement.

Dans le cas précis de ce procédé de fabrication, le traitement consiste à porter la structure dans une étuve pendant une heure à 90°C, puis pendant une heure à 140°C.

L'opération d'armage longitudinal se déroule de la façon suivante.

Après refroidissement le produit est repositionné sur la machine d'enroulement préalablement citée. On dépose alors, par bobinage polaire c'est-à-dire en faisant passer le renfort longitudinal autour des pôles du réservoir, une mèche d'aramide qui permet d'assurer la résistance aux efforts longitudinaux dûs à la pression.

On peut aussi déposer une tresse qui joue le rôle de renfort longitudinal.

A titre d'élément de comparaison avec l'art antérieur, le réservoir ainsi constitué a une masse de 2,1 Kg, ce qui correspond environ au tiers de la masse d'un réservoir conventionnel (6 Kg) pour une même capacité et ceci tout en conservant la même tenue à la pression d'éclatement. La pression d'écrasement de ce réservoir est supérieure à 0,6 MPa.

De façon identique au procédé de fabrication préalablement décrit, le réservoir ainsi obtenu peut être entouré par la protection supplémentaire constituée par un conteneur en carton ondulé et d'un materiau ayant un bon comportement en cas d'incendie.

Une autre façon de réaliser la fabrication d'une telle bouteille consiste , dans l'opération d'armage circonférentiel, à remplacer le préimprégné de fibres de verre-époxy précédent par un ruban de fibres de verres imprégné de polyamide 12, de 2 mm de largeur et de 0,35 mm d'épaisseur.

Dans ce cas, le traitement de stabilisation de la composition comprenant des fibres de renforcement consiste à faire passer le produit ainsi obtenu dans un courant d'air chauffé à 265°C sur une longueur suffisante pour que la résine soit fondue sur une profondeur d'environ 0,01 mm. Le courant d'air chaud vient lécher la surface du composite déjà posé dans une portion externe creuse de la partie de la gaine ondulée en amont du point de pose, de façon à ce que la surface du composite déjà posé soit légèrement fondue, ou très proche de sa température de fusion. Le ruban de fibres ainsi posé vient se souder au point de pose sur celui déjà en place, donnant ainsi une excellente cohésion au renfort, alors qu'il n'aura pas d'adhésion sur la gaine de métal ondulée, insuffisamment chauffée pour permettre une telle adhésion, mais suffisamment cependant pour permettre que la résine épouse exactement la forme de cette gaine, ramenant ainsi les contraintes locales correspondantes à la pression à la valeur des contraintes moyennes, ce qui est obtenu naturellement avec les composites durcissables utilisés à l'état liquide.

L'invention n'est pas limitée à l'emploi d'une résine thermodurcissable particulière. On pourra par exemple mélanger une résine avec son durcisseur pour imprégner les filaments qui serviront à garnir les portions externes creuses du tube ondulé, et chauffer ensuite. On peut aussi réaliser une vulcanisation en garnissant les ondes de filaments préalablement imprégnés de latex additionné de soufre.

On peut aussi utiliser une résine formo-phénolique, une résine mélamine-formaldéhyde, une résine urée-formaldéhyde, une résine époxyde, une résine polyester ou vinylester, ou une résine alkyde, ou mettre en place dans les portions creuses du tube ondulé des mèches constituées d'un mélange de fibres renforçantes et de fibres thermoplastiques fusibles ou des fibres renforçantes garnies de poudre de résine thermoplastique fusible, puis, après enroulement, procéder à un traitement thermique permettant d'obtenir la fusion du thermoplastique avant de procéder au refroidissement assurant le durcissement de l'ensemble.

Il est également possible de réchauffer la mèche comportant des fibres de renfort et la résine fusible, par exemple au moyen d'un chalumeau juste avant le point de pose de facon à fondre la résine juste avant de déposer la mèche imprégnée. Le traitement thermique ultérieur devient alors inutile. Le fait que le renforcement circonférentiel soit discontinu dans le sens axial du réservoir, et qu'il ne soit pas lié au renfort longitudinal, évite les phénomènes de micro fissuration.

L'utilisation de composites à matrice thermoplastique, dans tous les procédés décrits précédemment, peut présenter l'avantage de supprimer l'opération de stabilisation complémentaire après le bobinage, cette stabilisation pouvant être réalisée par refroidissement durant le bobinage lui-même.

## Revendications

1. Réservoir pour stocker les fluides sous pression composé d'une gaine interne constituée de deux fonds (3, 4) séparés par une zone cylindrique ondulée (2) et assemblés audit corps cylindrique, lesdits fonds étant munis d'au moins une ouverture et de moyens de fermeture ou de communication avec l'extérieur (5, 6) tels un bouchon ou une canne située sur lesdits fonds et de moyens de résistance à la traction longitudinale (7), la gaine interne de la zone cylindrique comportant des ondulations, les ondes de ladite zone cylindrique ayant une forme circonférencielle ou hélicoïdale à faible pas, caractérisé en ce que les creux extérieurs (2a, 2b) des ondulations de ladite gaine interne sont garnis d'une composition comprenant des fibres de renforcement et en ce que les moyens de résistance à la traction longitudinale (7) sont placés sur l'ensemble de la structure externe du réservoir à l'exception des ouvertures.

2. Réservoir selon la revendication 1, caractérisé en ce que la composition comprend une résine époxy ou une résine thermodurcissable ou une résine thermoréticulable armée de fibres de renforcement.

3. Réservoir selon la revendication 1, caractérisé en ce que les moyens de résistance à la traction longitudinale sont des fibres bobinées de façon polaire ou hélicoïdale à pas long et/ou une tresse mise en place sur la structure externe du réservoir.

4. Procédé de fabrication d'un réservoir, utilisable pour le stockage des fluides sous pression, caractérisé en ce que :
(a) on réalise une gaine interne d'un réservoir constituée par deux fonds hémisphériques ou ellipsoïdaux et par une zone cylindrique comportant des ondulations circonférencielles,
(b) on garnit sur au moins une partie de leur hauteur (H), les portions externes creuses de la partie de la gaine interne ondulée sensiblement cylindrique du réservoir, d'une composition comportant une résine stabilisable comprenant des fibres de renforcement,
(c) on soumet le réservoir ainsi armé sur au moins une partie de sa longueur à un traitement qui permet la stabilisation de la composition stabilisable,
(d) on dépose sur l'ensemble de la structure externe du réservoir ainsi armé circonférenciellement à l'exception des ouvertures, un renfort longitudinal.

5. Procédé selon la revendication 4, caractérisé en ce que l'étape (a) peut être effectuée par moulage par extrusion soufflage d'un matériau extrudable dans un moule dont la paroi est constituée par une zone cylindrique comportant des ondulations circonférencielles et des fonds hémisphériques ou ellipsoïdaux.

6. Procédé selon la revendication 5, caractérisé en ce que le matériau extrudable est un matériau thermoplastique.

7. Procédé selon la revendication 4, caractérisé en ce que l'étape (a) peut être effectuée par la fixation de fonds ellipsoïdaux ou hémisphériques par des moyens de fixation aux deux extrémités d'une zone cylindrique ondulée, les fonds présentant des ouvertures à chacune des extrémités de façon à déterminer une gaine interne d'un réservoir.

8. Procédé selon la revendication 4, caractérisé en ce que la résine est une résine photoréticulable et la stabilisation est réalisée en exposant ledit ensemble à l'action d'une lampe génératrice de rayonnement ultra-violet.

9. Procédé selon la revendication 4, dans lequel la résine est une résine thermoréticulable et l'ensemble est maintenu à l'étape de stabilisation dans des conditions permettant à la réticulation de se produire.

10. Procédé selon la revendication 4, dans lequel la résine est une résine thermodurcissable et la stabilisation est réalisée par chauffage dudit ensemble jusqu'à une température permettant le durcissement de la résine.

11. Procédé selon la revendication 4, caractérisé en ce que le renfort longitudinal est constitué d'une mèche d'aramide imprégné d'élastomère thermoplastique, les extrémités des mèches étant fixées par collage aux extrémités du réservoir.

12. Procédé selon la revendication 4, caractérisé en ce que après l'étape (d), on projette une solution d'un élastomère thermoplastique de façon à constituer une couche protectrice.

13. Procédé selon la revendication 4, caractérisé en ce que l'on recouvre le tube flexible garni de ladite composition durcissable renforcée de fibres, d'une gaine de matériau substantiellement non perméable à ladite résine, de manière à maintenir celle ci sensiblement en place dans lesdites portions externes creuses du tube ondulé, avant de procéder à l'armage longitudinal.

14. Procédé selon la revendication 13, caractérisé en ce que le traitement de stabilisation est effectué en même temps que le bobinage.

15. Procédé selon l'une des revendications de 4 à 14, dans lequel au moins une extrémité du réservoir est pourvue d'un système permettant la communication avec l'extérieur ou la fermeture étanche.

16. Procédé selon l'une des revendications de 4 à 14, dans lequel le réservoir est placé dans une enveloppe protectrice.

## Claims

1. A tank for storing pressurised fluids made from an internal casing comprising two bases (3, 4) separated by a corrugated cylindrical zone (2) and assembled to the cylindrical body, these bases being fitted with at least one aperture and means for closing off from or communicating with the exterior (5, 6) such as a plug or a valve located on these bases and means for providing resistance to longitudinal traction (7), the internal casing of the cylindrical zone having undulations, the undulations of the cylindrical zone being circumferential or helicoid in shape and of a low pitch, characterised in that the external hollows (2a, 2b) of the undulations of the internal casing are filled with a composition containing reinforcing fibres and in that the means providing resistance to longitudinal traction (7) are located over the whole of the external structure of the tank with the exception of the apertures.

2. A tank as claimed in claim 1, characterised in that the composition contains an epoxy resin or a thermosetting resin or a cross-linkable resin strengthened with reinforcing fibres.

3. A tank as claimed in claim 1, characterised in that the means providing resistance to longitudinal traction are fibres wound in a polar direction or helically with a long pitch and/or a braid placed on the external structure of the tank.

4. A method of manufacturing a tank that may be used to store pressurised fluids, characterised in that:
(a) an internal casing for a tank is made up from two hemispherical or ellipsoidal bases and a cylindrical zone having circumferential undulations,
(b) the hollow external sections of the corrugated, substantially cylindrical part of the internal casing of the tank are filled over at least a part of their height (H) with a composition containing a stabilisable resin with reinforcing fibres,
(c) the tank strengthened in this manner is subjected over at least a part of its length to a process that enables stabilisation of the stabilisable composition'
(d) a longitudinal reinforcement is applied to the whole of the external structure of the tank strengthened around its circumference as above, with the exception of the apertures.

5. A method as claimed in claim 4, characterised in that step (a) may be carried out by moulding by blow-moulding an extrusible material in a mould whose wall is made up of a cylindrical zone having undulations around its circumference and hemispherical or ellipsoidal bases.

6. A method as claimed in clam 5, characterised in that the extrusible material is a thermoplastic material.

7. A method as claimed in claim 4, characterised in that step (a) may be carried out by fixing the ellipsoidal or hemispherical bases to the two ends of a corrugated cylindrical zone by fixing means, the bases having apertures at each of the ends so as to form an internal casing for a tank.

8. A method as claimed in claim 4, characterised in that the resin is a photocurable resin and stabilisation is achieved by exposing the assembly to radiation from an ultra-violet lamp.

9. A method as claimed in claim 4, in which the resin is a cross-linking resin and the assembly is maintained at the stabilisation stage under conditions that allow cross-linking to occur.

10. A method as claimed in claim 4, in which the resin is a thermosetting resin and stabilisation is achieved by heating the assembly to a temperature that will allow the resin to harden.

11. A method as claimed in claim 4, characterised in that the longitudinal reinforcement is made from aramide strand impregnated with thermoplastic elastomer, the ends of the strands being joined to the ends of the tank by bonding.

12. A method as claimed in claim 4, characterised in that after step (d), a solution of a thermoplastic elastomer is projected so as to form a protective layer.

13. A method as claimed in claim 4, characterised in that the flexible tube filled with the thermosetting composition reinforced with fibres is covered with a sheath of material that is essentially non-permeable to the resin so as to retain the resin substantially in position in the hollow external sections of the corrugated tube before moving on to the longitudinal strengthening process.

14. A method as claimed in claim 13, characterised in that the stabilisation process is carried out simultaneously with the winding.

15. A method as claimed in claims 4 to 14, in which at least one end of the tank is provided with a system to enable communication with the outside or tight sealing.

16. A method as claimed in one of claims 4 to 14, in which the tank is placed in a protective jacket.

## Patentansprüche

1. Behälter zum Aufbewahren von unter Druck stehenden Fluiden, der aus einem inneren Mantel, welcher durch zwei Böden (3, 4) gebildet ist, die durch einen gewellten, zylindrischen Bereich (2) getrennt und an dem zylindrischen Körper montiert sind, wobei die Böden mit wenigstens einer Öffnung und einer Einrichtung zur Schließung oder zur Verbindung mit dem Äußeren (5, 6), so wie einem Abschluß oder einem an den Böden angeordneten Ventil, sowie aus einer Längszugfestigkeitseinrichtung (7) zusammengesetzt ist, wobei der innere Mantel des zylindrischen Bereichs Welligkeiten umfaßt, wobei die Wellen des zylindrischen Bereichs eine Umfangsform oder Spiralform mit geringer Steigung aufweisen, dadurch gekennzeichnet, daß die äußeren Vertiefungen (2a, 2b) der Welligkeiten von dem inneren Mantel mit einer Zusammensetzung versehen sind, die Verstärkungsfasern umfaßt, und daß die Längszugfestigkeitseinrichtungen (7) an der Einheit der äußeren Struktur des Behälters mit Ausnahme der Öffnungen angeordnet sind.

2. Behälter nach Anspruch 1, dadurch gekennzeichnet, daß die Zusammensetzung ein Epoxyharz oder ein wärmeaushärtbares Harz oder ein wärmevernetzbares, mit Verstärkungsfasern armiertes Harz umfaßt.

3. Behälter nach Anspruch 1, dadurch gekennzeichnet, daß die Längszugfestigkeitseinrichtungen polartig oder spiralförmig gewickelte Fasern mit großer Steigung und/oder eine auf der äußeren Struktur des Behälters aufgebrachte Beflechtung sind.

4. Verfahren zur Herstellung eines zur Aufbewahrung von unter Druck stehenden Fluiden verwendbaren Behälters, dadurch gekennzeichnet, daß:
(a) man einen inneren Mantel eines Behälters verwirklicht, der durch zwei halbkugelförmige oder ellipsoidische Böden und durch einen Umfangswelligkeiten umfassenden, zylindrischen Bereich gebildet ist,
(b) man auf wenigstens einen Teil der Höhe (H) von den äußeren, tiefen Bereichen des Teils des inneren, gewellten und im wesentlichen zylindrischen Mantels des Behälters eine Zusammensetzung aufbringt, die ein stabilisierbares Harz enthält, welches Verstärkungsfasern umfaßt,
(c) man den so armierten Behälter einer Behandlung, welche die Stabilisierung der stabilisierbaren Zusammensetzung gestattet, über wenigstens einen Teil seiner Länge zu unterwerfen,
(d) man auf die Einheit der äußeren Struktur des so armierten Behälters umfangsmäßig mit Ausnahme der Öffnungen eine Längsverstärkung aufbringt.

5. Verfahren nach Anspruch 4, dadurch gekennzeichnet, daß der Schritt (a) durch Formung mittels Extrusionsblasen von einem extrudierbaren Material in einer Form, deren Wandung durch einen Umfangswelligkeiten umfassenden, zylindrischen Bereich und halbkugelförmige oder ellipsoidische Böden gebildet ist, durchgeführt werden kann.

6. Verfahren nach Anspruch 5, dadurch gekennzeichnet, daß das extrudierbare Material ein thermoplastisches Material ist.

7. Verfahren nach Anspruch 4, dadurch gekennzeichnet, daß der Schritt (a) durch die Befestigung der ellipsoidischen oder halbkugelförmigen Böden durch Befestigungseinrichtungen an zwei Enden eines gewellten, zylindrischen Bereichs durchgeführt werden kann, wobei die Böden Öffnungen an jedem der Enden aufweisen, derart, um einen inneren Mantel eines Behälters zu definieren.

8. Verfahren nach Anspruch 4, dadurch gekennzeichnet, daß das Kunstharz ein photovernetzbares Harz ist und die Stabilisierung durchgeführt wird, indem die Einheit der Wirkung einer Generatorlampe von ultravioletter Strahlung unterworfen wird.

9. Verfahren nach Anspruch 4, dadurch gekennzeichnet, daß das Harz ein wärmevernetzbares Harz ist und die Einheit bei dem Schritt der Stabilisierung unter Bedingungen gehalten wird, welche zur Erzeugung der Vernetzung führen.

10. Verfahren nach Anspruch 4, dadurch gekennzeichnet, daß das Harz ein wärmeaushärtendes Harz ist und die Stabilisierung durch Erwärmung der Einheit bis auf eine Temperatur durchgeführt wird, welche die Aushärtung des Harzes gestattet.

11. Verfahren nach Anspruch 4, dadurch gekennzeichnet, daß die Längsverstärkung durch ein von einem thermoplastischen Elastomer imprägnierten Aramidfasergespinnst gebildet ist, wobei die Enden des Vorgespinnstes an den Enden des Behälters durch Verklebung fixiert werden.

12. Verfahren nach Anspruch 4, dadurch gekennzeichnet, daß man nach dem Schritt (d) eine Lösung eines thermoplastischen Elastomers aufspritzt, derart, um eine Schutzschicht zu bilden.

13. Verfahren nach Anspruch 4, dadurch gekennzeichnet, daß man das flexible, mit der aushärtbaren, faserverstärkten Zusammensetzung versehene Rohr mit einem Mantel aus im wesentlichen nicht-durchlässigem Material auf das Harz überzieht, derart, um dieses im wesentlichen an der Stelle in den äußeren, tiefen Bereichen des gewellten Rohres vor Vornahme der Längsarmierung zu halten.

14. Verfahren nach Anspruch 13, dadurch gekennzeichnet, daß die Behandlung zur Stabilisierung gleichzeitig wie die Wicklung durchgeführt wird.

15. Verfahren nach einem der Ansprüche 4 bis 14, dadurch gekennzeichnet, daß wenigstens ein Ende des Behälters mit einem System versehen ist, daß die Verbindung mit dem Äußeren oder die dichte Schließung gestattet.

16. Verfahren nach einem der Ansprüche 4 bis 14, bei welchem der Behälter in einer Schutzumhüllung angeordnet ist.
